# EUROPÄISCHE PATENTSCHRIFT

(11) **EP 0 453 755 B1**
(45) Veröffentlichungstag und Bekanntmachung des Hinweises auf die Patenterteilung: **24.08.1994**
(21) Anmeldenummer: 91104016.0
(22) Anmeldetag: 15.03.1991
(51) Int. Cl.: G02B 7/02, G02B 9/16, G02B 25/00

(54) **Stark vergrösserndes achromatisches Linsensystem**
High-power magnifying achromatic lens system
Système de lentilles achromatique à fort grossissement

(30) Priorität: 20.03.1990 DE 9003214 U
(43) Veröffentlichungstag der Anmeldung: 30.10.1991
(73) Patentinhaber: ESCHENBACH OPTIK GmbH + Co., 90006 Nürnberg (DE)
(72) Erfinder: Henkelmann, Klaus, W-8505 Röthenbach (DE)
(74) Vertreter: Tergau, Enno, Dipl.-Ing.

(56) Entgegenhaltungen:
- DE-A- 3 405 789
- DE-B- 2 300 985
- GB-A- 1 467 285
- US-A- 3 443 864
- US-A- 4 886 342

## Beschreibung

Die Neuerung betrifft ein achromatisches Linsensystem insbesondere für Lupen und Lesegläser aus drei Linsen mit unterschiedlichen Lichtbrechungs-Eigenschaften, die in einem Halter montiert und/oder miteinander verkittet werden können. Ein derartiges Linsensystem ist beispielweise aus GB-A-1 467 285 bekannt.

Derartige achromatische Linsensysteme sind bekannt. Sie bestehen meist aus einer bi-konvexen Kronglaslinse, welche mit einer konkav-konvexen Flintglaslinse kombiniert, in der Regel verkittet ist. Sollen solche Linsensysteme für hochwertige Anwendungszwecke, beispielsweise für technische Lupen, verwendet werden, so müssen sie über das gesamte Gesichtsfeld ein farbenfreies, randscharfes und verzeichnungsfreies Bild liefern, also gut auskorrigiert sein. Die gleiche Forderung gilt allerdings auch für stark vergrößernde Lesegläser. Zur Durchführung einer derartigen Korrektur müssen die Brechungseigenschaften, insbesondere die Abbéschen Zahlen, sowie ferner auch die geometrischen Formen der Linsen sorgfältig aufeinander abgestimmt sein. Bei starken Vergrößerungen, wie sie hier speziell gefordert werden, sind dabei geometrische Formen mit starker Krümmung erforderlich. Diese Formen genau einzuhalten, erfordert einen hohen schleiftechnischen Aufwand und führt deshalb zu entsprechend hohen Kosten.

Die Kosten können teilweise reduziert werden, wenn die Flintglaslinse durch eine Kunststofflinse ersetzt wird. Solche Linsensyseme sind bekannt, sie haben jedoch den Nachteil, daß die Kunststofflinse leicht verkratzt und möglicherweise blind wird.

Der Neuerung liegt die Aufgabe zugrunde, ein Linsensystem zu schaffen, welches ohne Einbuße an optischer und mechanischer Qualität auch in hochwertiger Ausführung kostengünstig herstellbar ist.

Die Lösung dieser Aufgabe ist Gegenstand des Kennzeichens des Anspruches 1.

Es handelt sich also um ein Triplet-System mit besonderem Aufbau, wobei die Besonderheit zunächst darin besteht, daß die Mittellinse eine Kunststofflinse ist. Solche Systeme lassen sich mit freien Linsenoberflächen, aber auch in verkitteter Ausführung einfach und kostengünstig herstellen, da die Mittellinse nicht durch Schleifen hergestellt wird, sondern - wie bei Kunststofflinsen üblich - nach dem Spritzformverfahren oder auch durch Pressen. Mit diesem Verfahren können zunächst kostengünstig beliebig komplizierte Oberflächenformen verwirklicht werden, insbesondere wenn die errechnete Oberflächengestalt mit Hilfe der neuen Computertechnik in eine Spritzform übertragen wird. Die geometrischen Formen der Mittellinse werden dabei so gewählt, daß die Krümmungen der beiden außenliegenden Kronglaslinsen verhältnismäßig klein sein können und daß die optischen Fehler möglichst gering werden. Desweiteren ermöglicht es die Herstellung der Mittellinse im Spritz- oder Preßverfahren aus Kunststoff, einstückig Abstandshalter anzuformen, die den Sollabstand der vorzugsweise aus Glas bestehenden Außenlinsen festlegen. Dies ist problemlos möglich und es entstehen keine Montage- oder Justierprobleme, da die Abstandshalter den optisch korrekten Linsenabstand unmittelbar bestimmen.

Die nach diesen Grundsätzen angefertigten Linsen lassen sich nun leicht in der üblichen Weise in einen entsprechend aufgebauten und gestalteten Rahmen einsetzen. Die optischen Eigenschaften sind mindestens gleich, meist besser als diejenigen von zweilinsigen Achromaten; die mechanischen Eigenschaften, insbesondere die Oberflächenkratzfestigkeit ist nicht beeinträchtigt, wenn die äußeren Linsen Glaslinsen sind.

Auch eine gleiche Ausbildung der beiden äußeren Linsen trägt zu einer kostengünstigen Fertigung bei. Wenn diese Linsen noch symmetrisch sind, vereinfacht dies weiter die Montage, weil sie in beiden möglichen Montagestellungen optisch gleich wirksam sind.

Wenn das Linsensystem so berechnet wird, daß die äußeren Linsen eine verhältnismäßig kleine Oberflächenkrümmung aufweisen, so verkürzt dies bei der Fertigung der äußeren Linsen aus Glas den Schleifvorgang und trägt somit weiter zur Kostengünstigkeit bei.

Ergänzend muß gesagt werden, daß das hier angegebene optische Prinzip, nämlich der Einsatz von Triplet-Systemen, deren äußere Linsen einfache Raumformen mit geringer Krümmung aufweisen und deren Mittellinse aus Kunststoff mit Flintglaseigenschaften besteht und verhältnismäßig kompliziert geformt sein kann, auch auf solche Systeme anwendbar ist, deren Außenlinsen ganz oder teilweise aus Kunststoff bestehen. Unter dem Ausdruck "teilweise" werden hier Linsen verstanden, deren äußere Oberfläche mit einer geeignet dimensionierten Hartschicht überzogen ist, wie dies bei anderen Linsensystemen, auch bei Brillengläsern an sich bekannt ist.

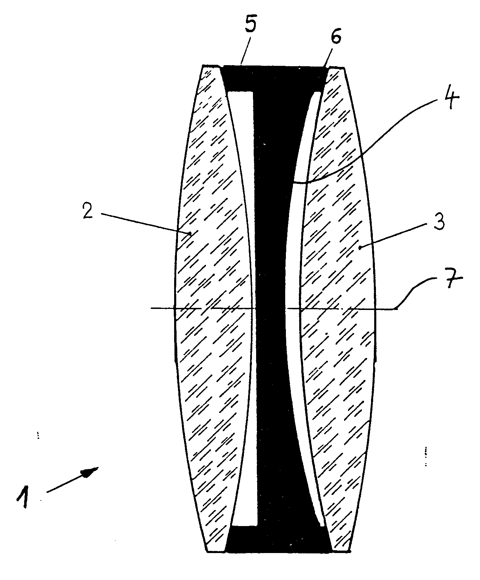

Die Neuerung wird im folgenden anhand der Zeichnung näher erläutert. In der Zeichnung ist eine beispielsweise Ausführungsform des Neuerungsgegenstandes schematisch im Längsschnitt dargestellt.

Das dargestellte achromatische Linsensystem ist als Ganzes mit 1 bezeichnet. Es besteht aus insgesamt drei Linsen, nämlich den beiden äußeren Linsen 2 und 3 aus Kronglas und der dazwischen angeordneten Kunststofflinse 4 mit Flintglaseigenschaften. Die Linse 4 ist in der Zeichnung zur besseren Unterscheidung schwarz dargestellt; es handelt sich in diesem Fall um eine plankonkave Linse. Die Zeichnung läßt erkennen, daß die beiden äußeren Linsen 2 und 3 symmetrisch und untereinander gleich sind und daß es sich im speziellen Fall jeweils um symmetrische bi-konvexe Linsen handelt. Die Zeichnung läßt weiter erkennen, daß die beiden äußeren Linsen 2 und 3 eine verhältnismäßig kleine Oberflächenkrümmung aufweisen. Die Systemachse ist mit der Positionsziffer 7 versehen.

An die im System mittlere Kunststofflinse 4 sind beidseitig und einstückig im Randbereich Abstandshalter 5 und 6 angeformt, die den Sollabstand der vorzugsweise aus Glas bestehenden Außenlinsen 2 und 3 festlegen. Bei diesen Abstandshaltern kann es sich um Ringe handeln, die an die beiden Randseiten der Kunststofflinse 4 angeformt, vorzugsweise mit angespritzt werden. Es kann sich aber auch um eine Anzahl von Erhebungen handeln, die möglichst gleichmäßig über den Umfang der Linse verteilt mit angespritzt werden.

Das vorgeschlagene achromatische Triplet-System wurde im Vorstehenden anhand von hochwertigen Lupen oder Lesegläsern beschrieben. Das dargestellte Systemprinzip läßt sich aber auch bei anderen optischen Systemen, wie beispielsweise Ferngläsern, Mikroskopen, Fotoapparaten o.dgl. einsetzen.

## Patentansprüche

1. Stark vergrößerndes achromatisches in einem Halter montierbares und/oder verkittbares Linsensystem, insbesondere für Lupen und Lesegläser, aus drei Linsen mit unterschiedlichen Lichtbrechungs-Eigenschaften,
dadurch gekennzeichnet,
daß die mittlere Linse (4) aus Kunststoff besteht und lediglich diese Linse mit an ihrem Rand den Sollabstand zu den beiden äußeren Linsen (2,3) festlegenden Abstandshaltern (5,6) versehen ist, welche einstückig mit der Linse gespritzt oder gepreßt sind.

2. Linsensystem nach Anspruch 1,
dadurch gekennzeichnet,
daß ein Abstandshalter (5,6) als rohrartiger Ring ausgebildet ist, dessen Ringachse etwa die Achse (7) des Linsensystems ist.

3. Linsensystem nach Anspruch 1 oder 2,
dadurch gekennzeichnet,
daß die beiden äußeren Linsen (2,3) untereinander gleich und gegebenenfalls symmetrisch sind.

4. Linsensystem nach einem oder mehreren der vorhergehenden Ansprüche,
dadurch gekennzeichnet,
daß die beiden äußeren Linsen (2,3) bi-konvexe Sammellinsen sind.

5. Linsensystem nach einem der vorausgehenden Ansprüche,
dadurch gekennzeichnet,
daß die beiden äußeren Linsen (2,3) eine verhältnismäßig kleine Oberflächenkrümmung aufweisen.

6. Linsensystem nach einem oder mehreren der vorhergehenden Ansprüche,
dadurch gekennzeichnet,
daß die äußeren Linsen (2,3) aus Kronglas bestehen.

7. Linsensystem nach einem oder mehreren der Ansprüche 1 bis 5,
dadurch gekennzeichnet,
daß auch die äußeren Linsen (2,3) ganz oder teilweise aus Kunststoff bestehen.

8. Linsensystem nach einem oder mehreren der vorhergehenden Ansprüche,
gekennzeichnet durch
Flintglaseigenschaften der mittleren Kunststofflinse (4).

## Claims

1. A high-power achromatic lens system that can be mounted in a holder and/or be cemented, in particular for magnifying glasses or reading lenses, consisting of three lenses with different optical refraction properties,
characterized in that
the median lens (4) consists of a synthetic material and that only this lens is provided at its edge with distance pieces (5, 6) which determine the desired spacing from the two outer lenses (2, 3) and are integrally injection moulded or moulded with the lens.

2. A lens system according to claim 1,
characterized in that
one distance piece (5, 6) is designed as a tubular ring whose ring axis is approximately the axis (7) of the lens system.

3. A lens system according to claim 1 or 2,
characterized in that
the two outer lenses (2, 3) are the same with respect to each other and symmetrical if required.

4. A lens system according to one or more of the preceding claims,
characterized in that
the two outer lenses (2, 3) are bi-convex convergent lenses.

5. A lens system according to one of the preceding claims,
characterized in that
the two outer lenses (2, 3) have a relatively small surface curvature.

6. A lens system according to one or more of the preceding claims,
characterized in that
the outer lenses (2, 3) consist of crown glass.

7. A lens system according to one or more of claims 1 to 5,
characterized in that
the outer lenses (2, 3) also consist wholly or partly of a synthetic material.

8. A lens system according to one or more of the preceding claims,
characterized by
flint glass properties of the median synthetic lens (4).

## Revendications

1. Système de lentilles achromatiques à fort grossissement pouvant être monté et/ou collé dans un support, en particulier pour des loupes ou des verres de lecture, composé de trois lentilles possédant des propriétés de réfraction différentes, caractérisé en ce que la lentille centrale (4) est en matière plastique et en ce que seule cette lentille est pourvue sur son bord d'écarteurs (5, 6) qui fixent l'écartement de consigne par rapport aux deux lentilles extérieures (2, 3), ces écarteurs étant moulés ou pressés d'une seule pièce avec la lentille.

2. Système de lentilles selon la revendication 1, caractérisé en ce qu'un écarteur (5, 6) est réalisé sous la forme d'un anneau en forme de tube dont l'axe annulaire est approximativement l'axe du système de lentilles.

3. Système de lentilles selon la revendication 1 ou 2, caractérisé en ce que les deux lentilles (2, 3) extérieures sont identiques et le cas échéant symétriques.

4. Système de lentilles selon l'une ou plusieurs des revendications précédentes, caractérisé en ce que les deux lentilles (2, 3) extérieures sont des lentilles convergentes bi-convexes.

5. Système de lentilles selon l'une des revendications précédentes, caractérisé en ce que les deux lentilles (2, 3) extérieures présentent une courbure de surface relativement petite.

6. Système de lentilles selon l'une ou plusieurs des revendications précédentes, caractérisé en ce que les lentilles (2, 3) extérieures sont en crown.

7. Système de lentilles selon l'une ou plusieurs des revendications 1 à 5, caractérisé en ce que les lentilles (2, 3) extérieures sont aussi entièrement ou partiellement en matière plastique.

8. Système de lentilles selon l'une ou plusieurs des revendications précédentes, caractérisé en ce que la lentille centrale (4) en matière plastique présente les propriétés du flint.
